# EUROPÄISCHE PATENTSCHRIFT

(11) **EP 1 891 139 B1**
(45) Veröffentlichungstag und Bekanntmachung des Hinweises auf die Patenterteilung: **28.08.2013**
(21) Anmeldenummer: 06741036.5
(22) Anmeldetag: 13.06.2006
(51) Int. Cl.: C08G 63/80, C08G 63/78, C08G 69/06, B29B 13/02, B29C 31/02

(54) **VERFAHREN UND ANLAGE ZUR ERHÖHUNG DER GRENZVISKOSITÄT VON POLYESTERNATIONAL MITTELS FESTPHASENPOLYKONDENSATION**
METHOD AND DEVICE FOR INCREASING THE LIMITING VISCOSITY OF POLYESTER MATERIALS BY SOLID PHASE POLYCONDENSATION
PROCEDE ET DISPOSITIF POUR AUGMENTER LA VISCOSITE LIMITE DE MATIERES POLYESTER PAR POLYCONDENSATION EN PHASE SOLIDE

(30) Priorität: 14.06.2005 AT 10002005
(43) Veröffentlichungstag der Anmeldung: 27.02.2008
(73) Patentinhaber: Fellinger, Markus, 4073 Wilhering (AT)
(72) Erfinder: Fellinger, Markus, 4073 Wilhering (AT)
(74) Vertreter: Margotti, Herwig Franz
(86) Internationale Anmeldenummer: PCT/AT2006/000237
(87) Internationale Veröffentlichungsnummer: WO 2006/133469

(56) Entgegenhaltungen:
- EP-A- 0 836 921

## Beschreibung

Die Erfindung betrifft ein Verfahren und eine Anlage zur Erhöhung der Grenzviskosität von Polyestermaterial mittels Festphasenpolykondensation, wobei das Polyestermaterial in einen Reaktionsbehälter eingebracht und in dem Reaktionsbehälter bei einer vorgegebenen Wärmebehandlungstemperatur für eine vorgegebene Verweilzeit verweilen gelassen wird, bis das Polyestermaterial eine gewünschte Grenzviskosität aufweist, und danach das Polyestermaterial in einen Kühlbehälter abgegeben wird, wo es unter eine erste Kühltemperatur, die unter der Reaktionstemperatur liegt, abgekühlt wird.

Bei der Herstellung hochmolekularer Polyester, wie beispielsweise PET und PEN, macht man sich ein einzigartiges Verhalten von Polyester unter den Kunststoffen zunutze, wonach bei Verweilen von Polyester unter hohen Temperaturen Polykondensation der Polyester-Moleküle auftritt und sich damit die Viskosität des Polyesters erhöht. Das Verweilenlassen des Polyesters erfolgt unter Vakuum oder Inertgas, um den oxidativen Abbau zu verhindern, Diese Gewinnung hochmolekularer Polyester aus niedrig-molekularem Polyester-Ausgangsmaterial erfolgt üblicherweise mittels Schmelzpolykondensation (MPPC) oder Festphasenpolykondensation (SSP) oder einer Kombination aus beiden Verfahren.

Bei der Schmelzpolykondensation wird Polyesterschmelze bei Temperaturen um ca. 270°C bis 300°C für ca. 30 Minuten bis 5 Stunden unter starkem Vakuum von ca. 1 mbar verarbeitet. Nachteilig ist hierbei, dass auf Grund der hohen Verarbeitungstemperaturen der eingangs erläuterte oxidative Abbauprozess des Polyesters stattfindet, der zur Gelbfärbung führt und der Polykondensation des Polyesters entgegenwirkt. Die durch Schmelzpolykondensation erzielbaren Grenzviskositätswerte liegen bei ca. 0,6 IV (= Intrinsic Viscosity).

Bei der Festphasenpolykondensation wird die Polyesterschmelze üblicherweise durch mehrere Düsen extrudiert, und die dabei entstehenden Kunststoffstränge werden darauffolgend in einem Wasserbad abgekühlt. Nach der Erhärtung der Kunststoffstränge werden diese granuliert, d.h. zu Pellets geschnitten. Durch die schnelle Abkühlung liegt das Polyester im amorphen Zustand vor. Dies ist wichtig, da ursprünglich transparente Polyestermaterialien im amorphen Zustand durchsichtig bleiben, wogegen bei langsamer Abkühlung Polyester einen kristallinen Zustand einnimmt, in dem sich ursprünglich transparentes Material weiß verfärbt. Zur weiteren Verarbeitung muss das Polyestergranulat wieder erwärmt werden, wobei es im Bereich der Kristallisationstemperatur (80 - 120 °C) zu einem Verkleben der Granulatkörper kommt. Daher wird das Granulat zunächst einem sog. Kristallisator zugeführt, in dem es unter starkem Rühren auf eine Temperatur über der Kristallisationstemperatur gebracht wird, um die Rieselfähigkeit der Granulatkörner für die weitere Behandlung zurückzugewinnen, was für den Transport und die Trocknung in einem Behälter ohne Rührwerk von großer Bedeutung ist. In kristalliner Form nimmt das Granulat darüber hinaus weniger Feuchte auf und erlaubt dadurch kürzere Verweilzeiten während der Trocknung. Das Granulat wird danach zur Erhöhung der Grenzviskosität einem Festphasenpolykondensations-Behälter, auch SSP (Solid State Polycondensation)-Reaktor oder Wärmebehandlungs-Behälter genannt, zugeführt, darin auf ca. 190 bis 250 °C erwärmt und anschließend für ca. 1-40 Stunden unter diesen Bedingungen im SSP-Reaktor belassen, bis die gewünschte Grenzviskosität erreicht ist.

Grundsätzlich kann man die Verfahren für SSP in zwei Gruppen einteilen, nämlich in kontinuierliche SSP, wie z.B. in DE 100 54 240 beschrieben, bei denen normalerweise Stickstoff als Inertgas verwendet wird, der gleichzeitig als Wärmeträgermedium und Transportmedium für aus der Polykondensation abgeschiedene Abspaltprodukte dient, und diskontinuierliche SSP, wie in DE 197 10 098 beschrieben, bei denen das Kunststoffmaterial in einen Taumeltrockner gefüllt, unter Vakuum bis über die Reaktionstemperatur erwärmt, auf dieser Temperatur verweilen gelassen, bis sich die erwünschte Grenzviskosität einstellt, und anschließend wiederum in derselben Trommel unter die Reaktionstemperatur gekühlt wird. Ein semikontinuierliches SSP-Verfahren ist weiters in WO 2004/029130 A1 offenbart. Es sei erwähnt, dass sich die in den genannten Veröffentlichungen beschriebenen kontinuierlichen bzw. semikontinuierlichen SSP-Verfahren nur für die Erhöhung der Grenzviskosität von Kunststoffgranulat auf solche Weise eignen, bei der das Kunststoffgranulat nach Erreichen der gewünschten Grenzviskosität durch Verweilen im SSP-Reaktor bei Temperaturen über der Reaktionstemperatur im SSP-Reaktor abgekühlt und darin im gekühlten Zustand gelagert wird.

Neuere Verfahren ermöglichen die Eliminierung des Festphasen-Polykondensationsschrittes, indem durch spezielle Ausführungen der Anlage und längere Verweilzeiten des Polyestermaterials die gewünschte Grenzviskosität direkt mittels Schmelzpolykondensation (MPPC) hergestellt wird. Allerdings ist dieses Verfahren zur Erhöhung der Grenzviskosität speziell für die Preform-Produktion nachteilig, da durch das Weglassen des SSP-Schrittes auch eine normalerweise in der Festphase stattfindende Reduktion von Acetaldehyd im Polyester entfällt. Diese Reduktion des Acetaldehyds ist aber für manche Anwendungen des Polyesters im Lebensmittelbereich unerlässlich, so dass bei der Erhöhung der Grenzviskosität durch MPPC die Zugabe von teuren Additiven erforderlich ist, um die gewünschte Reduktion von Acetaldehyd zu erreichen.

Hochmolekulare Polyester, wie PET, PEN, PA oder PC, werden nach ihrer Behandlung zur Erhöhung der Grenzviskosität in zahlreichen Anwendungsgebieten eingesetzt, beispielsweise in so genannten Preforms zur Herstellung von Kunststoffflaschen, weiters für Umreifungsbänder, Thermoformfolien und -platten etc.. Die Behandlung des Polyestermaterials zur Erhöhung der Grenzviskosität erfolgt nach einem der oben beschriebenen Verfahren in Raffinerien, anschließend wird das behandelte Kunststoffgranulat auf Umgebungstemperatur abgekühlt, in Transportbehälter abgefüllt und z.B. zu einer Preform-Fabrik geliefert. Da das Polyester-Granulat aufgrund seiner hygroskopischen Eigenschaften während der Lagerung und des Transports Wasser gebunden hat, muss in der Preform-Fabrik das hochmolekulare Polyester-Granulat zunächst in einem Trockner aus dem kalten Zustand auf ca. 160 - 180 °C erhitzt werden, um das gebundene Wasser zu entfernen, bevor es in Spritzgussmaschinen zu Preforms verarbeitet werden kann. Zur Trocknung des Granulats sind Verweilzeiten im Trockner von 6 Stunden oder mehr erforderlich, anderenfalls käme es zu großen Viskositätsverlusten des Polyesters. Dieser erforderliche Trocknungsschritt schränkt die Verarbeitungsgeschwindigkeit des Kunststoff-Granulats ein und erfordert hohe Energiezufuhr, wobei in Betrachtung der Gesamt Energiebilanz die Abkühlung des Polyester-Granulats in der Raffinerie und seine spätere Wiedererwärmung zur Trocknung in der Verarbeitungsfabrik äußerst nachteilig ist.

Um die Gesamtenergiebilanz zu verbessern, wurde bereits vorgeschlagen, das Polyester-Granulat nicht schon in der Raffinerie bei seiner Herstellung einer SSP-Behandlung zu unterziehen, sondern diese SSP-Behandlung des Polyester-Granulats erst in der Verarbeitungsfabrik unmittelbar vor seiner Verarbeitung in einer Verarbeitungsmaschine, wie einer Spritzgussmaschine, durchzuführen. Dazu wird das in der Raffinerie hergestellte Granulat, das typischerweise eine Grenzviskosität von ca. 0,64 IV aufweist, in einen der Verarbeitungsmaschine vorgeschalteten SSP-Reaktor gefördert und darin der SSP-Behandlung zur Erhöhung der Grenzviskosität auf die gewünschten Werte unterzogen, bei der auch gleichzeitig eine Trocknung des Materials stattfindet und das Acetaldehyd im Granulat auf unter 1ppm reduziert wird. Für die Preformherstellung kann somit billiges, nicht SSP-behandeltes Rohmaterial direkt aus der Raffinerie verwendet werden.

Die bisherigen Vorschläge zur Durchführung der SSP-Behandlung von Kunststoffmaterial unmittelbar vor seiner Verarbeitung in Spritzgussmaschinen etc. erfordern jedoch, dass nach einem Hochfahren der Anlage der Dauerbetrieb aufrechterhalten wird, da ansonsten die in der Anlage stattfindenden Reaktionen des Kunststoffmaterials nicht kontrolliert werden können, was zu schwankender Qualität des Kunststoffmaterials und/oder zum Auftreten von schädlichen Substanzen führen kann; letzteres ist bei der Erzeugung von Produkten für die Lebensmittelindustrie (PET-Flaschen etc.) inakzeptabel. Praktisch kann jedoch im täglichen Betrieb von kunststoffverarbeitenden Anlagen ein gleichmäßiger Dauerbetrieb nicht garantiert werden, sei es aufgrund von Störungen oder notwendigen Umrüstungen von Maschinen und Werkzeugen, die einen vorübergehenden Stillstand der Maschinen oder zumindest eine erheblich verringerte Arbeitsgeschwindigkeit erfordern.

Ziel der vorliegenden Erfindung ist es daher, ein Verfahren und eine Vorrichtung der eingangs angeführten Art bereitzustellen, durch welche die geschilderten Nachteile des Standes der Technik gemildert oder gar beseitigt werden. Insbesondere ist es eine Aufgabe der vorliegenden Erfindung, ein Verfahren und eine Anlage zur Erhöhung der Grenzviskosität von Polyestermaterial mittels Festphasenpolykondensation bereitzustellen, bei dem ein SSP-Reaktor anstelle eines Trockners direkt einer Kunststoffverarbeitungsmaschine, wie einer Spritzguss- oder Extrusionsmaschine vorgeschaltet ist, wobei aber schwankender Durchsatz des Kunststoffmaterials oder Stillstand der Kunststoffverarbeitungsmaschine nicht zu einer schwankenden Qualität des zugeführten Kunststoffmaterials führt, oder durch ein Stoppen und Wiederanfahren des SSP-Reaktors lange Anlaufzeiten und/oder hohe Materialverluste hingenommen werden müssen.

Die vorliegende Erfindung löst die gestellte Aufgabe durch Bereitstellen eines Verfahrens zur Erhöhung der Grenzviskosität von Polyestermaterial mit den kennzeichnenden Merkmalen des Anspruchs 1 sowie durch Bereitstellen einer Anlage zur Erhöhung der Grenzviskosität von Polyestermaterial, wie in Anspruch 13 definiert. Vorteilhafte Ausgestaltungen der Erfindung sind in den Unteransprüchen dargelegt. Die Reaktionstemperatur ist jene Temperatur, bei der die Erhöhung der Grenzviskosität des Polyesters messbar beginnt. Sie liegt beispielsweise für PET bei 180°C. Die Messung der Erhöhung der Grenzviskosität kann gemäß der DIN-Norm DIN 53 728 "Bestimmung der Viskositätszahl von Polyethylenterephthalat (PETP) oder Polybutylen- terephthalat (PBTP) in verdünnter Lösung" erfolgen.

EP 0 836 921 A2 offenbart eine Vorrichtung und ein Verfahren zur Erhöhung der Grenzviskosität von Polyestermaterial, gemäβ der Präambel der Ansprüche 1 bzw 12.

Gemäß der Erfindung wird die Erhöhung der Grenzviskosität von Polyestermaterial mittels Festphasenpolykondensation (SSP) in einem beheizbaren Reaktionsbehälter durchgeführt, wobei der Reaktionsbehälter einer oder mehreren Kunststoffverarbeitungsmaschinen vorgeschaltet ist. Durch den Einsatz des Reaktionsbehälters (SSI-Reaktors) vor den Kunststoffverarbeitungsmaschinen (Spritzgussmaschine, Extrud er für Folien, Umreifungsbänder, Monofilamente oder Platten, etc.) können die Kosten für das Rohmaterial um ca. 10-20% gegenüber einer Anlieferung von in einer Raffinerie SSPvorbehandeltem Polyestermaterial reduziert werden, da keine Trocknung des angelieferten Materials anfällt. Das Polyestermaterial wird in den Reaktionsbehälter eingebracht und bei einer vorgegebenen Wärmebehandlungstemperatur, die zumindest die Reaktionstemperatur des Polyestermaterials ist, für eine vorgegebene Verweilzeit darin gelassen, bis es eine gewünschte Grenzviskosität erreicht hat. Anschließend wird es in einen stromabwärts vom Reaktionsbehälter angeordneten Kühlbehälter gefördert und in dem Kühlbehälter auf eine erste Kühltemperatur abgekühlt, wobei die erste Kühltemperatur unter der Reaktionstemperatur des Polyestermaterials liegt und dadurch eine weitere Erhöhung der Grenzviskosität des Polyestermaterials gestoppt wird. Erfindungsgemäß wird das abgekühlte Polyestermaterial aus dem Kühlbehälter zu einer stromabwärts vom Kühlbehälter angeordneten Polyestermaterial-Weiche gefördert, die dazu ausgebildet ist, den Polyestermaterial-Strom zu einer Polyestermaterial-Verarbeitungsmaschine und/oder zu einem Zwischenspeicherbehälter umzuschalten. Im normalen Produktionsbetrieb ist die Polyestermaterial-Weiche so gestellt, dass das abgekühlte Polyestermaterial der zumindest einen Verarbeitungsmaschine zugeführt wird. Sollte es zu einer Störung oder einem Gebrechen einer Verarbeitungsmaschine kommen, oder sollte eine Umrüstung einer oder mehrerer Verarbeitungsmaschinen erforderlich werden, so wird die Polyestermaterial-Weiche so umgeschaltet, dass zumindest ein Teilstrom des Kunststoffmaterials zu einem Zwischenspeicherbehälter abgezweigt wird, bei einem Gesamtstopp der Verarbeitungsmaschinen wird der gesamte Kunststoffmaterialstrom zum Zwischenspeicherbehälter geführt. Der Zwischenspeicherbehälter kann beliebig groß dimensioniert werden, um sicherzustellen, dass auch bei längeren Maschinenstillständen ausreichende Zwischenspeicherkapazität vorhanden ist, um das inzwischen anfallende SSPbehandelte Polyestermaterial aufzunehmen. Der wesentliche Vorteil der Erfindung gegenüber dem Stand der Technik ist es, dass auch bei vorübergehendem Stopp der Verarbeitungsmaschinen oder bei reduzierter Verarbeitungsgeschwindigkeit des Polyestermaterials nicht in den SSP-Prozess eingegriffen werden muss, sondern dieser weiterlaufen kann, und insbesondere auch kein Stoppen des SSP-Prozesses erforderlich ist. Wie wichtig dies ist, wird verständlich, wenn man bedenkt, dass sich in dem SSP Reaktor üblicherweise zwischen 1 und ca. 10 Tonnen Polyester-Granulat oder -Mahlgut über Reaktionstemperatur von 180°C oder mehr befinden. Es ist prozesstechnisch kaum beherrschbar, eine solche große Menge an Kunststoff im SSP-Reaktor zum Niederfahren des SSP-Prozesses gleichmäßig abzukühlen und später wieder aufzuheizen und dabei für das gesamte Kunststoffmaterial eine gleichmäßige Verweilzeit über Reaktionstemperatur und somit eine gleichmäßige Grenzviskosität zu gewährleisten

Durch den Einsatz des SSP-Reaktors direkt vor der Verarbeitungsmaschine kann in der erfindungsgemäßen Anlage die Viskosität des Kunststoffmaterials individuell auf den Verarbeitungsschritt in der Verarbeitungsmaschine bzw, auf das damit hergestellte Produkt eingestellt werden und somit weitere Prozessoptimierungen bezüglich Zykluszeiten durchgeführt werden. Beispielsweise benötigt Kunststoffmaterial als Ausgangsprodukt für Preforms für die Herstellung von Kunststoffflaschen für kohlensäurearmes Mineralwasser aufgrund niedrigerer Festigkeitswerte für die Flaschen nur eine Grenzviskosität von 0,72 IV, CSD Flaschen benötigen aufgrund des höheren Drucks in der Flasche Grenzviskositätswerte des Rohmaterials von 0,82 IV. Da in der erfindungsgemäßen Anlage die Grenzviskosität des Polyestermaterials direkt vor der Verarbeitungsmaschine individuell eingestellt werden kann, kann immer das gleiche Rohmaterial eingekauft werden, was die Logistik vereinfacht (es entfällt beispielsweise das bei Wechsel des Rohmaterials erforderliche Reinigen der Rohmaterialsilos) und niedrigere Einkaufspreise aufgrund größerer Bestellmengen ermöglicht. Da weiters nach der SSP-Behandlung des Polyestermaterials keine lange Lagerung des Materials anfällt, sondern das Material sofort verarbeitet wird, kann sich der Acetaldehyd-Gehalt im Material nicht erhöhen, wie es bei konventioneller Herstellung aufgrund von Lagerung und Transport vorkommt. Somit sind erfindungsgemäß weder teure Additive noch spezielle Nachbehandlungsverfahren zur Reduzierung des Acetaldehyd-Gehalts erforderlich, sondern erfindungsgemäß erfolgt eine Acetaldehyd-Gehalt-Reduzierung in dem SSP-Reaktor direkt vor der Verarbeitungsmaschine. Durch die Wärmebehandlung des Polyestermaterials und einer langen Verweilzeit von typischerweise mehr als 6h im Reaktionsbehälter ist davon auszugehen, dass die von der FDA vorgeschriebenen Werte erreicht werden, da es durch den Diffusionsprozess im Reaktionsbehälter zu einer maßgeblichen Reduzierung von allfälligen Verunreinigungen im Polyestermaterial kommt. Dies lässt Anwendungen, wie die Direktextrusion von Folien für Lebensmittelkontakt und Spritzgussanwendungen für den Lebensmittelbereich zu, unabhängig von einem vorgeschaltetem Waschprozess des Polyestermaterials.

In einer Ausgestaltung der Erfindung ist vorgesehen, dass das Polyestermaterial, wenn es anschließend an den Zwischenspeicherbehälter abzugeben ist, in dem Kühlbehälter auf eine zweite Kühltemperatur abgekühlt wird, die unter der ersten Kühltemperatur liegt. Die zweite Kühltemperatur sollte, abhängig vom Polyestermaterial, höchstens 160°C, vorzugsweise höchstens 140°C, in manchen Fällen auch deutlich weniger (z.B. höchstens 80 °C) betragen, da beispielsweise PET bei Lagerung über 160°C sich gelb verfärbt. Die Steuerung des Kühlbehälters ist zweckmäßig an die Stellung der Polyestermaterial-Weiche gekoppelt.

Der Kühlbehälter ist in einer Ausgestaltung der Erfindung, die sich besonders für kleine und mittlere Anlagen eignet, evakuierbar ausgeführt, und wird vorzugsweise bei einem Vakuum zwischen 0,1 und 10 mbar betrieben.

In einer alternativen Ausgestaltung der Erfindung, die aufgrund besserer Wärmeenergieübertragung zu schnellerer Abkühlung des Kunststoffmaterials führt, wird das Polyestermaterial in dem Kühlbehälter mittels Trockenluft oder einem Inertgas abgekühlt. Allerdings ist bei dieser Ausführungsform der apparative Aufwand größer, insbesondere beim Einsatz von Inertgas, das in einem geschlossenen Kreislauf geführt und gereinigt werden muss.

Der Kühlbehälter der erfindungsgemäßen Anlage kann als Austragsbehälter für den Reaktionsbehälter fungieren, wozu er als Schleusenbehälter ausgebildet ist, der an seinem Polyestermaterial-Einlass und seinem Polyestermaterial-Auslass vakuumdichte Absperrorgane aufweist. Die Abgabe des gekühlten Polyestermaterials erfolgt dabei chargenweise.

Zur Steigerung der Geschwindigkeit der Abkühlung des Polyestermaterials im Kühlbehälter ist in einer vorteilhaften Ausgestaltung der erfindungsgemäßen Anlage der Kühlbehälter mit einem Rührwerk versehen.

In einer bevorzugten Ausführungsform der Erfindung wird das Polyestermaterial bereits vor seinem Einbringen in den Reaktionsbehälter zumindest auf Reaktionstemperatur erwärmt. Dies kann in kleineren Mengen in einem dem Reaktionsbehälter vorgeschaltetem Vorwärmbehälter geschehen, wobei das erwärmte Material chargenweise aus dem Vorwärmbehälter an den Reaktionsbehälter abgegeben wird.

Es ist zu beachten, dass die Wärmebehandlungstemperatur im Reaktionsbehälter zwar materialabhängig gewählt wird, für die meisten Materialien jedoch zumindest 180 °C betragen sollte.

Der Reaktionsbehälter kann in einer Ausgestaltung der Erfindung, die sich aufgrund ihrer einfachen Konstruktion besonders für kleine und mittlere Anlagen eignet, unter einem Vakuum, vorzugsweise zwischen 0,1 und 10 mbar gehalten werden. Alternativ dazu wird der Reaktionsbehälter mit einem Wärmeträgermedium, vorzugsweise einem Inertgas oder Trockenluft, durchströmt. Diese Konstruktion bringt jedoch wesentlich höheren apparativen Aufwand mit sich, der sich nur bei Großanlagen rechnet.

Die Erfindung wird nun unter Bezugnahme auf die Zeichnungen anhand von zwei Ausführungsbeispielen näher erläutert, auf die die Erfindung jedoch nicht beschränkt ist.

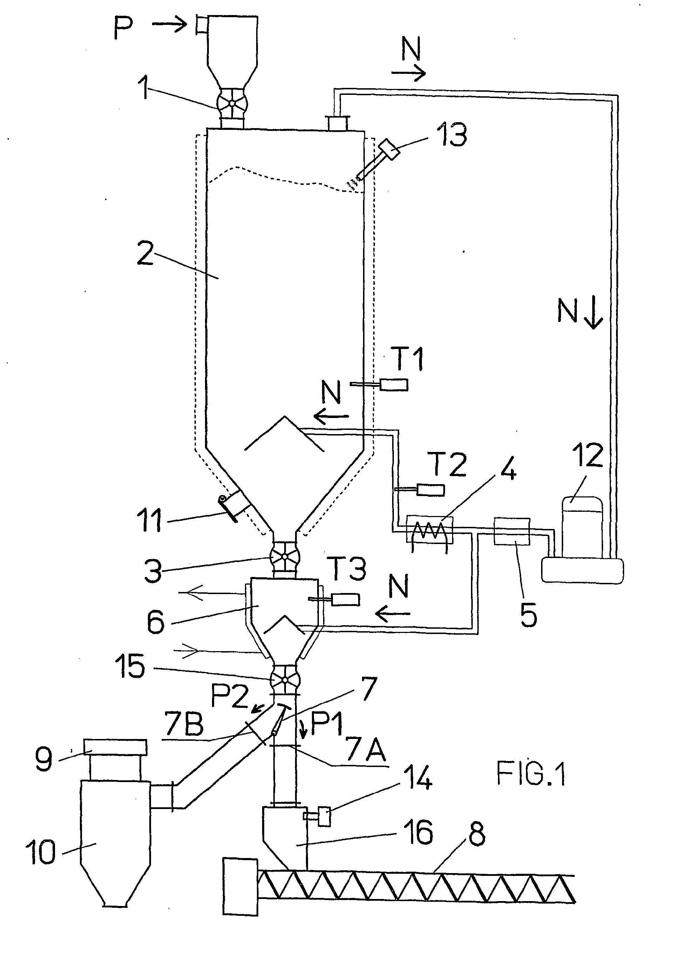

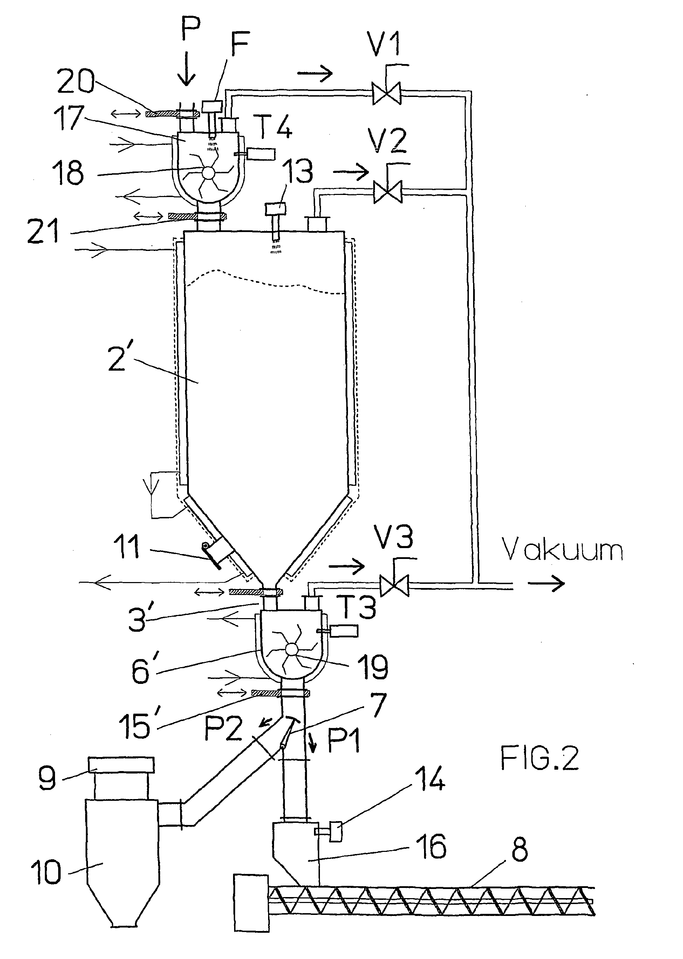

In den Zeichnungen zeigen Fig. 1 in einem schematischen Schaltbild eine erste Ausführungsform einer erfindungsgemäßen Anlage zur Erhöhung der Grenzviskosität von Polyestermaterial, und Fig. 2 in einem schematischen Schaltbild eine zweite Ausführungsform einer erfindungsgemäßen Anlage zur Erhöhung der Grenzviskosität von Polyestermaterial.

Zunächst auf Fig. 1 Bezug nehmend wird eine erste Ausführungsform der erfindungsgemäßen Anlage zur Erhöhung der Grenzviskosität von Polyestermaterial mit einem durch Trockenluft oder Inertgas geheizten Reaktionsbehälter erläutert. Polyestermaterial P, das PET, PA, PC etc. umfasst und als Granulat oder Mahlgut aus Flaschen, Preforms etc. vorliegt, wird in kristalliner Form, vorzugsweise vorgewärmt, über ein Absperrorgan 1, dargestellt als Zellradschleuse, einem SSP-Reaktionsbehälter 2 zugeführt, wo es mittels eines Wärmeträgermediums N, z.B. einem Inertgas, wie Stickstoff, oder Trockenluft, auf eine Wärmebehandlungstemperatur, die zumindest so hoch ist wie die Reaktionstemperatur des zu behandelnden Polyestermaterials und vorzugsweise darüber, aber unter der Schmelztemperatur des Polyestermaterials liegt, erwärmt wird. Die Reaktionstemperatur ist jene Temperatur, bei der die Erhöhung der Grenzviskosität des Polyestermaterials messbar beginnt. Die Wärmebehandlungstemperatur wird in Abhängigkeit vom zugeführten Polyestermaterial eingestellt, beträgt im Allgemeinen aber zumindest 180 °C, vorzugsweise etwa 220°. Die Temperatur im Inneren des Reaktionsbehälters wird mittels eines Temperatursensors T1 gemessen. Das Wärmeträgermedium N wird dem Reaktionsbehälter 2 in seinem unteren Bereich zugeführt und im oberen Bereich des Reaktionsbehälters 2 über ein (nicht dargestelltes) Gebläse oder einen Seitenkanalverdichter 12 abgesaugt und über eine Gaswäsche- bzw. Gastrocknungseinrichtung 5 von enthaltenen Verunreinigungen bzw. von Feuchte befreit. Anschließend wird das Wärmeträgermedium N mittels einer Heizung 4 auf die Wärmebehandlungstemperatur erhitzt und wiederum dem Reaktionsbehälter 2 zugeführt, wobei die Temperatur des Wärmeträgermediums N von einem Temperatursensor T2 in der Zuleitung zum Reaktionsbehälter 2 gemessen wird. Bezugszeichen 13 bezeichnet einen Füllstandsensor für den Reaktionsbehälter 2.

Über die Verweilzeit des Polyestermaterials im SSP-Reaktionsbehälter 2 stellt sich eine Festphasen-Polykondensation des Polyestermaterials ein, die zu einer Erhöhung seiner Grenzviskosität führt, wobei dabei entstehende bzw. vorhandene Beiprodukte mit dem Wärmeträgermediumstrom abgesaugt werden. Im unteren Bereich des Reaktionsbehälters 2 ist eine Öffnung 11 zur Probeentnahme vorgesehen, um den Polymerisierungsgrad des Kunststoffes zu bestimmen.

Über ein Absperrorgan 3, ausgeführt als Schleusenrad, wird das Polyester nach seiner SSP-Behandlung aus dem Reaktionsbehälter 2 in einen Kühlbehälter 6 befördert. Am Ausgang des Kühlbehälters 6 ist ein weiteres Absperrorgan 15 angeordnet, dem eine Polyestermaterial-Weiche 7 folgt, die zwei Ausgänge 7A, 7B aufweist, wobei Ausgang 7A mit einer Rohrleitung zu einer Polyestermaterial-Verarbeitungsmaschine 8, hier als Schneckenextruder ausgebildet, verbunden ist, und Ausgang 7B mit einer Rohrleitung zu einem Zwischenspeicherbehälter 10 verbunden ist. Die Polyestermaterial-Weiche 7 verzweigt je nach Stellung den durch das Absperrorgan 15 hindurchtretenden Polyestermaterialstrom in einen zur Verarbeitungsmaschine 8 führenden Materialstrom P1 oder einen zum Zwischenspeicherbehälter 10 führenden Materialstrom P2, wobei auch Zwischenstellungen, d.h. die Abzweigung von Teilströmen in beide Pfade, möglich sind.

Das Polyestermaterial im Kühlbehälter 6 wird in Abhängigkeit davon, ob die nachgeschaltete Verarbeitungsmaschine 8 Material benötigt, was durch einen Füllstandsensor 14 an einem Zuführtrichter 16 der Verarbeitungsmaschine 8 gemessen wird, entweder auf eine erste Kühltemperatur, die unter der Reaktionstemperatur des Polyestermaterials im Reaktionsbehälter 2 liegt, z.B. unter 180°C für PET, oder auf eine zweite Kühltemperatur, die unter der ersten Kühltemperatur liegt abgekühlt, wobei die zweite Kühltemperatur unter einer Temperatur liegen soll, bei der Gelbfärbung des Polyestermaterials bei Lagerung auftritt, z.B. unter 160°C für PET. Es versteht sich, dass die zweite Kühltemperatur auch wesentlich tiefer sein, beispielsweise im Bereich zwischen 70 und 120 °C ausgewählt werden kann. Ein Kriterium für die Wahl der zweiten Kühltemperatur ist auch die Temperaturbeständigkeit des Zwischenspeicherbehälters 10. Beispielsweise kann die erste Kühltemperatur im Bereich zwischen 140 und 179°C eingestellt werden, und die zweite Kühltemperautr zwischen 70 und 139°C eingestellt werden. Die Abkühlung des Polyestermaterials auf die erste Kühltemperatur wird immer dann durchgeführt, wenn das Polyestermaterial der Verarbeitungsmaschine 8 zugeführt werden soll. In diesem Fall ist zwar eine Abkühlung unter die Reaktionstemperatur erforderlich, um den Prozess der Erhöhung der Grenzviskosität zu stoppen, aus Energiespargründen andererseits aber eine möglichst geringe Abkühlung erwünscht, da in der Verarbeitungsmaschine 8 wieder eine Erhöhung der Temperatur des Kunststoffguts auf die Schmelztemperatur erfolgt und somit eine geringere Energiezufuhr erforderlich ist, wenn das Kunststoffgut bereits mit höherer Temperatur in die Verarbeitungsmaschine eingebracht wird. Die Abkühlung des Polyestermaterials auf die zweite (niedrigere) Kühltemperatur wird dann vorgenommen, wenn das Polyestermaterial an den Zwischenspeicher 10 abzugeben ist. In diesem Fall soll sichergestellt werden, dass keine Gelbfärbung des Polyestermaterials mehr stattfinden kann, d.h. die zweite Kühltemperatur wird so gewählt, dass sie z.B. für PET unter 160°C liegt bzw. sie wird entsprechend niedriger gewählt, um eine problemlose Lagerung des Polyestermaterials zu ermöglichen. Die Regelung des Kühlbehälters 6, auf welche der beiden Kühltemperaturen das Polyestermaterial darin gekühlt wird, kann entweder in Abhängigkeit von den Signalen des Füllstandsensors 14 erfolgen, oder in Abhängigkeit von der Stellung der Polyestermaterialweiche 7. Meldet der Füllstandsensor 14, dass der Zuführtrichter 16 voll ist, so wird die Polyestermaterialweiche 7 so umgeschaltet, dass der Polyestermaterialstrom P2 in den Zwischenspeicherbehälter 10 fließt, wobei das Polyestermaterial im Materialstrom P2 zuvor bereits auf die zweite Kühltemperatur abgekühlt worden ist. Der Materialstrom P2 kann durch ein Förderorgan, wie z.B. eine Vakuumförderung 9, gefördert werden. Benötigt die Verarbeitungsmaschine 8 wieder Polyestermaterial, so wird die Polyestermaterialweiche 7 umgeschaltet, um den Materialstrom P1 zur Verarbeitungsmaschine 8 zu leiten, wobei gleichzeitig die Kühlung des Materials in dem Kühlbehälter auf die erste Kühltemperatur eingestellt wird.

Unter Bezugnahme auf Fig. 2 wird nun eine zweite Ausführungsform einer erfindungsgemäßen Anlage zur Erhöhung der Grenzviskosität von Polyestermaterial erläutert, die sich von der ersten Ausführungsform vor allem dadurch unterscheidet, dass der SSP-Reaktionsbehälter 2' unter Vakuum betrieben wird. Bauteile der zweiten Ausführungsfonn, die jenen der ersten Ausführungsform entsprechen, sind mit denselben Bezugszeichen bezeichnet und bei konstruktiven Unterschieden, aber gleicher Funktion zusätzlich mit einem Apostroph versehen.

Das kristalline, vorzugsweise vorgewärmte, Polyestermaterial P wird batchweise mittels Vakuumförderung in einen evakuierbaren Vormwärmbehälter 17 eingebracht, der gleichzeitig als Vakuumschleuse für den SSP-Reaktionsbehälter 2' dient. Dazu verfügt der Vorwärmbehälter 17 an seinem Eingang über ein Absperrorgan 20 in Form eines vakuumdichten Schiebers, und an seinem Ausgang ebenfalls über ein vakuumdichtes Absperrorgan 21. Zur schnelleren Erwärmung des Polyesters auf Reaktionstemperatur ist der Vorwärmbehälter weiters mit einem Rührwerk 18 versehen. Die Temperatur im Vorwärmbehälter wird mit einem Temperatursensor T4 erfasst. Nach dem Einbringen des Polyestermaterials P wird der Vorwärmbehälter 17 evakuiert und das Polyestermaterial auf Reaktionstemperatur oder darüber, jedenfalls aber auf eine Temperatur unter der Schmelztemperatur, erwärmt und anschließend durch Öffnen des Absperrorgans 21 an den SSP-Reaktionsbehälter 2' abgegeben. Bezugszeichen 13 bezeichnet einen Füllstandsensor für den Reaktionsbehälter 2'. Nach der gewünschten Verweilzeit im Reaktionsbehälter 2' (d.h. nachdem sich der gewünschte IV eingestellt hat) wird das Polyestermaterial über ein Absperrorgan 3', das hier als Schieber ausgebildet ist, chargenweise an einen Kühlbehälter 6' abgegeben, in dem das Polyestermaterial auf eine erste Kühltemperatur, die unter der Reaktionstemperatur liegt, abgekühlt wird. Zur Beschleunigung des Abkühlvorgangs weist der Kühlbehälter 6' ein Rührwerk 19 auf. Anschließend wird das Polyestermaterial durch ein Absperrorgan 15' in Form eines Schiebers an die Polyestermaterialweiche 7 abgegeben, die so geschaltet ist, dass der Polyestermaterialstrom P1 einem Zuführtrichter 16 einer Verarbeitungsmaschine 8 zugeführt wird. Bei "Voll"-Meldung des Füllstandsensors 14 am Zuführtrichter 16 wird das Absperrorgan 15' geschlossen und die Polyestermaterialweiche 7 umgeschaltet, so dass ein Transportpfad zwischen dem Kühlbehälter 6' und dem Zwischenspeicherbehälter 10 geöffnet wird. Das restliche im Kühlbehälter 6' befindliche Polyestermaterial wird auf eine zweite Kühltemperatur, die niedriger ist als die erste Kühltemperatur, abgekühlt, um ein Verkleben des Materials und seine Oxidation zu verhindern. Nach Erreichen der zweiten Kühltemperatur, gemessen durch den Temperatursensor T3, wird das Absperrorgan 15' wieder geöffnet und der Polyestermaterialstrom P2 mittels einer Vakuumfördereinrichtung 9 in den Zwischenspeicherbehälter 10 abgegeben. Obwohl die Verarbeitungsmaschine kein Polyestermaterial aufnehmen kann, sei es aufgrund einer Störung oder wegen erforderlichen Stillstands aufgrund einer Umrüstung, kann der SSP-Prozess im Reaktionsbehälter 2' unverändert weiter ablaufen, d.h. das Polyestermaterial wird chargenweise nach Ablauf der gewünschten Verweilzeit aus dem SSP-Reaktionsbehälter 2' an den Kühlbehälter 6' abgegeben, dort auf die zweite Kühltemperatur gekühlt und dann an den Zwischenspeicherbehälter 10 abgegeben.

Der Vorwärmbehälter 17, der Reaktionsbehälter 2' und der Kühlbehälter 6' sind über Vakuumleitungen mit einer nicht dargestellten Vakuumquelle verbunden, so dass in den genannten Behältern ein Vakuum zwischen 0,1 und 10 mbar erzeugbar ist. Die Steuerung der Evakuierung der einzelnen Behälter erfolgt über Ventile V1, V2, V3 in den Vakuumleitungen.

Es sei weiters erwähnt, dass auch Ausführungsformen der erfindungsgemäßen Anlage zur Erhöhung der Grenzviskosität von Polyestermaterial mittels SSP vorgesehen sind, die aus der Kombination von Teilen der oben erläuterten ersten und zweiten Ausführungsform bestehen. So wird in einer weiteren Anlagenkonfiguration das zuzuführende Polyestermaterial zunächst, beispielsweise in einer gewundenen Zuführrohrleitung, mittels Heiß- oder Trockenluft auf eine Temperatur erwärmt, die knapp unterhalb der Reaktionstemperatur liegt, z.B. auf ca. 170°C, und anschließend in einen vakuumdichten Vorwärmbehälter gefördert, der ein relativ geringes Fassungsvermögen von z.B. 100 kg aufweist.

Daraufhin wird das Polyestermaterial im Vorwärmbehälter unter Trockenluft auf eine Wärmebehandlungstemperatur von z.B. ca. 200°C erwärmt, dann eine Vakuumschleuse zwischen der Zuführrohrleitung und dem Vorwärmbehälter geschlossen, der Vorwärmbehälter evakuiert, und die 100 kg Polyestermaterial an einen SSP-Behälter mit wesentlich größerem Fassungsvermögen abgegeben, wo eine SSP-Behandlung mit definierter Verweilzeit bei der Wärmebehandlungstemperatur stattfindet. Nach Ablauf der Verweilzeit wird das Polyestermaterial batchweise in einen Kühlbehälter abgegeben und darin auf die erste oder zweite Kühltemperatur abgekühlt, wie oben beschrieben.

## Patentansprüche

1. Verfahren zur Erhöhung der Grenzviskosität von Polyestermaterial mittels Festphasenpolykondensation (SSP), wobei das Polyestermaterial in einen Reaktionsbehälter (2, 2') eingebracht und in dem Reaktionsbehälter bei einer vorgegebenen Wärmebehandlungstemperatur, die zumindest so hoch ist wie die Reaktionstemperatur des Polyestermaterials; ab der eine Erhöhung der Grenzviskosität messbar ist, für eine vorgegebene Verweilzeit verweilen gelassen wird, bis das Polyestermaterial eine gewünschte Grenzviskosität aufweist, und danach das Polyestermaterial in einen Kühlbehälter (6, 6') abgegeben wird, wo es auf eine erste Kühltemperatur, die unter der Reaktionstemperatur liegt, abgekühlt wird, **dadurch gekennzeichnet, dass** das gekühlte Polyestermaterial stromabwärts vom Kühlbehälter (6, 6') umschaltbar direkt an eine Polyestermaterial-Verarbeitungsmaschine (8) und/oder einen Zwischenspeicherbehälter (10) abgegeben wird, wobei das Polyestermaterial in dem Kühlbehälter (6, 6') auf eine zweite Kühltemperatur, die niedriger als die erste Kühltemperatur ist und vorzugsweise unter einer Temperatur des Polyestermaterials liegt, bei der Verfärbung des Polyestermaterials auftritt, abgekühlt wird, bevor es anschließend an den Zwischenspeicherbehälter (10) abgegeben wird.

2. Verfahren nach Anspruch 1, **dadurch gekennzeichnet, dass** das Polyestermaterial in dem Kühlbehälter (6, 6') unter Vakuum abgekühlt wird.

3. Verfahren nach Anspruch 1, **dadurch gekennzeichnet, dass** das Polyestermaterial in dem Kühlbehälter (6, 6') mittels eines Wärmeträgermediums (N), wie Trockenluft oder einem Inertgas, abgekühlt wird.

4. Verfahren nach einem der vorhergehenden Ansprüche, **dadurch gekennzeichnet, dass** der Kühlbehälter (6, 6') als evakuierbarer Schleusenbehälter ausgebildet ist, der an seinem Polyestermaterial-Einlass und seinem Polyestermaterial-Auslass vakuumdichte Absperrorgane (3, 3'; 15, 15') aufweist.

5. Verfahren nach einem der vorhergehenden Ansprüche, **dadurch gekennzeichnet, dass** die Abkühlung des Polyestermaterials im Kühlbehälter (6, 6') unter Rühren erfolgt.

6. Verfahren nach einem der vorhergehenden Ansprüche, **dadurch gekennzeichnet, dass** das Polyestermaterial vor seinem Einbringen in den Reaktionsbehälter (2, 2') auf Wärmebehandlungstemperatur erwärmt wird.

7. Verfahren nach Anspruch 6, **dadurch gekennzeichnet, dass** das Polyestermaterial in einem Vorwärmbehälter (17) erwärmt und chargenweise aus dem Vorwärmbehälter an den Reaktionsbehälter (2') abgegeben wird.

8. Verfahren nach einem der vorhergehenden Ansprüche, **dadurch gekennzeichnet, dass** die Wärmebehandlungstemperatur zumindest 180 °C beträgt.

9. Verfahren nach einem der vorhergehenden Ansprüche, **dadurch gekennzeichnet, dass** der Reaktionsbehälter (2') unter einem Vakuum zwischen 0,1 und 10 mbar gehalten wird.

10. Verfahren nach einem der Ansprüche 1 bis 8, **dadurch gekennzeichnet, dass** der Reaktionsbehälter (2') mit einem Wärmeträgermedium (N), vorzugsweise einem Inertgas oder Trockenluft, durchströmt wird.

11. Verfahren nach einem der vorhergehenden Ansprüche, **dadurch gekennzeichnet, dass** die zweite Kühltemperatur höchstens 160°C, vorzugsweise höchstens 140°C, beträgt.

12. Anlage zur Erhöhung der Grenzviskosität von Polyestermaterial mittels Festphasenpolykondensation (SSP), mit einem beheizbaren Reaktionsbehälter (2, 2'), in dem das Polyestermaterial (P) bei einer vorgegebenen Wärmebehandlungstemperatur, die zumindest so hoch ist wie die Reaktionstemperatur des Polyestermaterials (P) für eine vorgegebene Verweilzeit, bis es eine gewünschte Grenzviskosität erreicht hat, verweilen gelassen werden kann, und mit einem stromabwärts vom Reaktionsbehälter angeordneten Kühlbehälter (6, 6'), wobei der Kühlbehälter (6, 6') zur Kühlung des aus dem Reaktionsbehälter abgegebenen Polyestermaterials auf eine erste Kühltemperatur, die unter der Reaktionstemperatur liegt, ausgebildet ist, wobei stromabwärts vom Kühlbehälter (6, 6') eine Polyestermaterial-Weiche (7) mit zwei Ausgängen (7A, 7B) angeordnet ist, **dadurch gekennzeichnet, dass** der eine Ausgang (7A) der Polyestermaterial-Weiche (7) mit einer Polyestermaterial-Verarbeitungsmaschine (8) verbunden ist und und der andere Ausgang (7B) der Polyestermaterial-Weiche (7) mit einem Zwischenspeicherbehälter (10) verbunden ist, wobei die Temperatur im Kühlbehälter (6, 6') in Abhängigkeit von der Stellung der Polyestermaterial-Weiche (7) verstellbar ist, wobei das Polyestermaterial in dem Kühlbehälter (6, 6') auf eine zweite Kühltemperatur abkühlbar ist, die unter der ersten Kühltemperatur liegt, wenn die Polyestermaterial-Weiche (7) so geschaltet ist, dass das Polyestermaterial dem Zwischenspeicherbehälter (10) zugeführt wird.

13. Anlage nach Anspruch 12, dadurch gekerinzeichnet, dass der Kühlbehälter (6') evakuierbar ist, vorzugsweise auf ein Vakuum zwischen 0,1 und 10 mbar.

14. Anlage nach einem der Ansprüche 12 oder 13, **dadurch gekennzeichnet, dass** der Kühlbehälter (6) mit einem Wärmeträgemedium (N), wie Trockenluft oder Inertgas, durchströmbar ist.

15. Anlage nach einem der Ansprüche 12 bis 14, **dadurch gekennzeichnet, dass** der Kühlbehälter (6, 6') als evakuierbarer Schleusenbehälter ausgebildet ist, der an seinem Polyestermaterial-Einlass und seinem Polyestermaterial-Auslass vakuumdichte Absperrorgane (3, 3'; 15, 15') aufweist.

16. Anlage nach einem der Ansprüche 12 bis 15, **dadurch gekennzeichnet, dass** der Kühlbehälter (6') ein Rührwerk (19) aufweist.

17. Anlage nach einem der Ansprüche 12 bis 16, **dadurch gekennzeichnet, dass** dem Reaktionsbehälter (2') ein, vorzugsweise mit einem beheizbaren Rührwerk (18) ausgestatteter, Vorwärmbehälter (17) vorgeschaltet ist, wobei der Vorwärmbehälter (17) vorzugsweise als Schleusenbehälter zur chargenweisen Abgabe von vorerwärmtem Polyestermaterial (P) an den Reaktionsbehälter (2') ausgebildet ist.

18. Anlage nach einem der Ansprüche 12 bis 17, **dadurch gekennzeichnet, dass** der Reaktionsbehälter (2') auf ein Vakuum zwischen 0,1 und 10 mbar evakuierbar ist.

19. Anlage nach einem der Ansprüche 12 bis 18, **dadurch gekennzeichnet, dass** der Reaktionsbehälter (2) mit einem Wärmeträgermedium (N), vorzugsweise einem Inertgas oder Trockenluft, durchströmbar ist.

20. Anlage nach einem der Ansprüche 12 bis 19, **dadurch gekennzeichnet, dass** der Kühlbehälter (6, 6') mit der Polyestermaterial-Weiche (7) und die Polyestermaterial-Weiche (7) mit der Polyestermaterial-Verarbeitungsmaschine (8) und mit dem Zwischenspeicher (10) feuchtigkeitsdicht verbunden sind.

## Claims

1. A method for increasing the intrinsic viscosity of a polyester material by solid phase polycondensation (SSP), wherein the polyester material is introduced into a reaction container (2, 2') and is left to reside in said reaction container at a predetermined thermal treatment temperature, which is at least as high as the reaction temperature of the polyester material, from which an increase in the intrinsic viscosity is measurable, for a predetermined residence time until the polyester material exhibits a desired intrinsic viscosity, and subsequently the polyester material is delivered into a cooling container (6, 6') where it is cooled down to a first cooling temperature which is lower than the reaction temperature, **characterized in that**, downstream of the cooling container (6, 6'), the cooled polyester material is delivered in a divertible manner directly to a polyester material processing machine (8) and/or to an intermediate storage container (10), wherein the polyester material in the cooling container (6, 6') is cooled down to a second cooling temperature which is lower than the first cooling temperature and preferably lower than a temperature of the polyester material at which discolouration of the polyester material occurs, before it is subsequently delivered to the intermediate storage container (10).

2. A method according to claim 1, **characterized in that** the polyester material in the cooling container (6, 6') is cooled under vacuum.

3. A method according to claim 1, **characterized in that** the polyester material in the cooling container (6, 6') is cooled using a heat-transfer medium (N) such as dry air or an inert gas.

4. A method according to any of the preceding claims, **characterized in that** the cooling container (6, 6') is designed as an evacuatable lock container which comprises vacuum-tight shut-off devices (3, 3'; 15, 15') on its polyester material inlet and its polyester material outlet.

5. A method according to any of the preceding claims, **characterized in that** the cooling of the polyester material in the cooling container (6, 6') is effected under stirring.

6. A method according to any of the preceding claims, **characterized in that** the polyester material is heated to a thermal treatment temperature before being introduced into the reaction container (2, 2').

7. A method according to claim 6, **characterized in that** the polyester material is heated in a preheating container (17) and delivered in batches from the preheating container to the reaction container (2').

8. A method according to any of the preceding claims, **characterized in that** the thermal treatment temperature amounts to at least 180°C.

9. A method according to any of the preceding claims, **characterized in that** the reaction container (2') is kept under a vacuum of between 0,1 and 10 mbar.

10. A method according to any of the preceding claims 1 to 8, **characterized in that** a heat-transfer medium (N), preferably an inert gas or dry air, is passed through the reaction container (2').

11. A method according to any of the preceding claims, **characterized in that** the second cooling temperature amounts to not more than 160°C, preferably not more than 140°C.

12. An installation for increasing the intrinsic viscosity of a polyester material by solid phase polycondensation (SSP), comprising a heatable reaction container (2, 2') in which the polyester material (P) can be left to reside at a predetermined thermal treatment temperature, which is at least as high as the reaction temperature of the polyester material (P), for a predetermined residence time until it has reached a desired intrinsic viscosity, and comprising a cooling container (6, 6') arranged downstream of the reaction container, the cooling container (6, 6') being designed for cooling the polyester material discharged from the reaction container to a first cooling temperature which is lower than the reaction temperature, wherein, downstream of the cooling container (6, 6'), a polyester material separator (7) with two outputs (7A, 7B) is arranged, **characterized in that** the one output (7A) of the polyester material separator (7) is connected to a polyester material processing machine (8) and the other output (7B) of the polyester material separator (7) is connected to an intermediate storage container (10), wherein the temperature in the cooling container (6, 6') is adjustable depending on the position of the polyester material separator (7), wherein the polyester material in the cooling container (6, 6') is coolable to a second cooling temperature which is lower than the first cooling temperature, if the polyester material separator (7) is switched such that the polyester material is supplied to the intermediate storage container (10).

13. An installation according to claim 12, **characterized in that** the cooling container (6') is evacuatable, preferably to a vacuum of between 0.1 and 10 mbar.

14. An installation according to claim 12 or 13, **characterized in that** a heat-transfer medium (N), such as dry air or inert gas, can be passed through the cooling container (6).

15. An installation according to any of claims 12 to 14, **characterized in that** the cooling container (6, 6') is designed as an evacuatable lock container which comprises vacuum-tight shut-off devices (3, 3'; 15, 15') on its polyester material inlet and its polyester material outlet.

16. An installation according to any of claims 12 to 15, **characterized in that** the cooling container (6') has a stirring device (19).

17. An installation according to any of claims 12 to 16, **characterized in that** a preheating container (17), preferably provided with a heatable stirring device (18), is arranged upstream of the reaction container (2'), the preheating container (17) preferably being designed as a lock container for the batchwise delivery of preheated polyester material (P) to the reaction container (2').

18. An installation according to any of claims 12 to 17, **characterized in that** the reaction container (2') is evacuatable to a vacuum of between 0.1 and 10 mbar.

19. An installation according to any of claims 12 to 18, **characterized in that** a heat-transfer medium (N), preferably an inert gas or dry air, can be passed through the reaction container (2).

20. An installation according to any of claims 12 to 19, **characterized in that** the cooling container (6, 6') is connected in a liquid-tight manner to the polyester material separator (7) and the polyester material separator (7) is connected in a liquid-tight manner to the polyester material processing machine (8) and the intermediate storage (10).

## Revendications

1. Procédé pour l'augmentation de la viscosité limite de matières polyester par polycondensation en phase solide (SSP), la matière polyester étant disposée dans un conteneur réactionnel (2, 2') et étant laissée dans le conteneur réactionnel pour un temps de séjour prédéterminé, à une température de traitement par la chaleur prédéterminée, qui est au moins aussi élevée que la température de réaction de la matière polyester, à partir de laquelle une augmentation de la viscosité limite peut être mesurée, jusqu'à ce que la matière polyester présente une viscosité limite souhaitée, et ensuite, la matière polyester est transvasée dans un conteneur de refroidissement (6, 6') où elle est refroidie jusqu'à une première température de refroidissement qui se situe en dessous de la température de réaction, **caractérisé en ce que** la matière polyester refroidie est transférée en aval du conteneur de refroidissement (6, 6'), directement, sans pouvoir y apporter un changement, vers une machine de traitement de la matière polyester (8) et/ou un conteneur de stockage intermédiaire (10), la matière polyester étant refroidie dans le conteneur de refroidissement (6, 6') à une deuxième température de refroidissement qui est inférieure à la première température de refroidissement et de préférence se situe en dessous d'une température de la matière polyester pour laquelle une coloration de la matière polyester se produit, avant d'être ensuite transférée dans le conteneur de stockage intermédiaire (10).

2. Procédé selon la revendication 1 **caractérisé en ce que** la matière polyester est refroidie sous vide dans le conteneur de refroidissement (6, 6').

3. Procédé selon la revendication 1 **caractérisé en ce que** la matière polyester est refroidie dans le conteneur de refroidissement (6, 6') au moyen d'un milieu caloporteur (N), comme de l'air sec ou un gaz inerte.

4. Procédé selon l'une des revendications précédentes **caractérisé en ce que** le conteneur de refroidissement (6, 6') est conçu comme un récipient d'éclusage pouvant être évacué qui présente des organes de fermetures (3, 3' ; 15, 15') étanches au vide à son entrée de matière polyester et à sa sortie de matière polyester.

5. Procédé selon l'une des revendications précédentes **caractérisé en ce que** le refroidissement de la matière polyester dans le conteneur de refroidissement (6, 6') a lieu sous agitation.

6. Procédé selon l'une des revendications précédentes **caractérisé en ce que** la matière polyester est chauffée à sa température de traitement thermique avant son alimentation dans le conteneur de réaction (2, 2').

7. Procédé selon la revendication 6 **caractérisé en ce que** la matière polyester est chauffée dans un conteneur de préchauffage (17) et est transférée, sous la forme de charges, du conteneur de préchauffage dans le conteneur de réaction (2').

8. Procédé selon l'une des revendications précédentes **caractérisé en ce que** la température de traitement thermique s'élève à au moins 180 °C.

9. Procédé selon l'une des revendications précédentes **caractérisé en ce que** le conteneur de réaction (2') est maintenu sous un vide entre 0,1 et 10 mbar.

10. Procédé selon l'une des revendications de 1 à 8 **caractérisé en ce que** le conteneur de réaction (2') est traversé par un milieu caloporteur (N), de préférence, un gaz inerte ou de l'air sec.

11. Procédé selon l'une des revendications précédentes **caractérisé en ce que** la deuxième température de refroidissement s'élève au maximum à 160 °C, de préférence au maximum à 140 °C.

12. Installation pour l'augmentation de la viscosité limite de matières polyester par polycondensation en phase solide (SSP) comprenant un conteneur de réaction (2, 2') pouvant être chauffé, dans lequel la matière polyester (P) peut être laissée séjourner pour une durée de séjour prédéterminée jusqu'à ce qu'une viscosité limite souhaitée soit atteinte, et comprenant un conteneur de refroidissement (6, 6'), disposé en aval du conteneur de réaction, le conteneur de refroidissement (6, 6') étant conçu pour le refroidissement de la matière polyester délivrée à partir du conteneur de réaction à une première température de refroidissement qui se situe en dessous de la température de réaction, un système d'aiguillage de la matière polyester (7), comprenant deux sorties (7A, 7B), étant disposé en aval du conteneur de refroidissement (6, 6'), **caractérisée en ce que** l'une des sorties (7A) du système d'aiguillage de la matière polyester (7) est reliée avec une machine de traitement de la matière polyester (8) et que l'autre sortie (7B) du système d'aiguillage de la matière polyester (7) est reliée avec un conteneur de stockage intermédiaire (10), la température dans le conteneur de refroidissement (6, 6') pouvant être réglée en fonction de la position du système d'aiguillage de la matière polyester (7), la matière polyester pouvant être refroidie à une deuxième température de refroidissement qui se situe en dessous de la première température de refroidissement, dans le conteneur de refroidissement (6, 6'), lorsque le système d'aiguillage de la matière polyester est réglé de sorte que la matière polyester est emmenée dans le conteneur de stockage intermédiaire (10).

13. Installation selon la revendication 12 **caractérisée en ce que** le conteneur de refroidissement (6') peut être évacué, de préférence sous un vide entre 0,1 et 10 mbar.

14. Installation selon l'une des revendications 12 ou 13 **caractérisée en ce que** le conteneur de refroidissement (6) peut être traversé par un milieu caloporteur (N) comme de l'air sec ou un gaz inerte.

15. Installation selon l'une des revendications de 12 à 14 **caractérisée en ce que** le conteneur de refroidissement (6, 6') est conçu comme un conteneur d'éclusage, pouvant être évacué, qui présente à son entrée de matière polyester et à sa sortie de matière polyester des organes de fermetures (3, 3' ; 15, 15') étanches au vide.

16. Installation selon l'une des revendications de 12 à 15 **caractérisée en ce que** le conteneur de refroidissement (6') présente un dispositif d'agitation (19).

17. Installation selon l'une des revendications de 12 à 16 **caractérisée en ce qu'**un conteneur de préchauffage (17) est disposé avant le conteneur de réaction (2'), équipé de préférence avec un dispositif d'agitation (18) pouvant être chauffé, le conteneur de préchauffage (17) étant de préférence conçu comme un conteneur d'éclusage pour une délivrance de matière polyester (P) préchauffée sous la forme de charges dans le conteneur de réaction (2').

18. Installation selon l'une des revendications de 12 à 17 **caractérisée en ce que** le conteneur de réaction (2') peut être évacué sous un vide entre 0,1 et 10 mbar.

19. Installation selon l'une des revendications de 12 à 18 **caractérisée en ce que** le conteneur de réaction (2) peut être traversé par un milieu caloporteur (N), de préférence, un gaz inerte ou de l'air sec.

20. Installation selon l'une des revendications de 12 à 19 **caractérisée en ce que** le conteneur de refroidissement (6, 6') est relié de manière étanche avec le système d'aiguillage de la matière polyester (7) et que le système d'aiguillage de la matière polyester (7) est reliée de manière étanche avec la machine de traitement de la matière polyester (8) et avec le stockage intermédiaire (10).
